Europäisches Patentamt

European Patent Office

Office européen des brevets

(19)

(11) Veröffentlichungsnummer : **0 172 160**
**B1**

(12) **EUROPÄISCHE PATENTSCHRIFT**

(45) Veröffentlichungstag der Patentschrift :
09.11.88

(51) Int. Cl.⁴ : **A 01 D 34/66**, A 01 D 43/08,
A 01 D 50/00, A 01 D 50/02

(21) Anmeldenummer : 85890180.4

(22) Anmeldetag : 12.08.85

(54) **Mäh- bzw. Häckselmaschine.**

(30) Priorität : 13.08.84 AT 2612/84

(43) Veröffentlichungstag der Anmeldung :
19.02.86 Patentblatt 86/08

(45) Bekanntmachung des Hinweises auf die Patenterteilung : 09.11.88 Patentblatt 88/45

(84) Benannte Vertragsstaaten :
AT BE CH DE FR GB IT LI NL

(56) Entgegenhaltungen :
EP-A- 0 116 532
GB-A- 1 283 550
US-A- 2 968 354

(73) Patentinhaber : Jetzinger, Franz
Schindau 31
A-3364 Neuhofen a.d. Ybbs (AT)

(72) Erfinder : Jetzinger, Franz
Schindau 31
A-3364 Neuhofen a.d. Ybbs (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

**Beschreibung**

Die Erfindung betrifft eine Mäh- bzw. Häckselmaschine mit wenigstens zwei vertikalachsigen Rotoren, deren Achsen in einer quer zur Fahrtrichtung angeordneten Ebene nebeneinander liegen und die aus horizontalen Scheiben bestehen, an deren Umfang um vertikale Bolzen schwenkbare Messer angelenkt sind, die aus der Scheibenebene auf- bzw. abwärtsgebogen sind, und mit wenigstens einem ortsfesten Gegenmesser, das im Zwickelbereich zwischen den Umlaufbahnen der Messer benachbarter Rotoren vorgesehen ist und mit diesen Messern zusammenwirkt.

Eine solche Maschine zählt nach der EP-A-0 116 532, die unter Artikel 54 (3) EPÜ fällt, zum Stand der Technik. Dabei sind an jeder Scheibe oben und unten verschieden lange Messer angeordnet, so daß sich die Umlaufkreise der Werkzeugenden benachbarter Rotoren überschneiden können, ohne daß die Gefahr besteht, daß die jeweils in einer Ebene rotierenden Messer zusammenschlagen. Das Naheaneinanderrücken benachbarter Rotoren hat den Vorteil, daß keine Streifen ungeschnittenen Schnittgutes stehen bleiben. Die am Scheibenumfang vorgesehenen ober- und unterhalb der Scheibenebene angeordneten Messer sind um einen gemeinsamen in der Scheibe festsitzenden Bolzen einseitig auskragend verschwenkbar. Die Gegenmesser reichen nur um ein geringes Maß in den Zwickel zwischen den Umlaufbahnen der Rotormesser hinein und besitzen nur eine, höchstens zwei Schneiden.

Es ist auch schon bekannt (US-PS 2 968 354), alle Werkzeuge gleich lang auszubilden, zwischen zwei Rotorscheiben zu befestigen und in einer gemeinsamen Horizontalebene umlaufen zu lassen, wobei aber ein mittlerer Rotor gegenüber den beiden benachbarten äußeren Rotoren in Fahrtrichtung versetzt ist, was eine Vergrößerung der Maschinenabmessungen und damit eine Erhöhung des Maschinengewichtes und des Leistungsbedarfes mit sich bringt. Ungünstig ist auch, daß die Messer an den Rotorscheiben nicht gelenkig, sondern starr radial befestigt sind, was bei Auftreffen auf ein Hindernis leicht zur Messerbeschädigung führen kann. Die Einzelmesser enden in einer dreischenkeligen Gabel, und es sind auch feste Gegenmesser vorgesehen, die diesem Dreizack angepaßt sind, jedoch läßt die Zerkleinerungswirkung trotz der Gegenmesser zu wünschen übrig, weil die Gegenmesser an den Seitenwänden bzw. an der Rückwand des Maschinengehauses befestigt sind und somit immer nur mit einem Messer zusammenwirken können, wogegen eine Gutbearbeitung zwischen den Messern benachbarter Rotoren und wenigstens einem Gegenmessers im Zwickelbereich fehlt. Außerdem ist Verstopfungsgefahr zwischen den Gegenmessern und den knapp zwischen ihnen durchtretenden Rotormessern vorhanden.

Bei einer anderen Konstruktion (GB-A-1 283 550) sind zwei mit verhältnismäßig großem Abstand nebeneinander angeordnete Rotoren vorgesehen, wobei die Messer aber nicht am Umfang von in einer Ebene liegenden Scheiben, sondern an kurzen in verschiedenen Höhen angeordneten Flacharmen der Rotorwellen angelenkt sind. Zwischen den beiden Rotoren befinden sich an der Vorder- und Rückseite Gegenmesser oder Abstreifer, die die Form eines Doppelkammes aufweisen, so daß die in verschiedener Höhenlage rotierenden Messer zwischen den Kammzinken durchtreten können. Nachteilig ist hier der große Rotorabstand und der vergleichsweise breite Steg zwischen den Kammzinken der Gegenmesser, so daß zwischen den Rotoren ungeschnittenes Gut stehen bleibt, wenn es sich nicht um in Reihen gepflanztes Erntegut handelt. Gleiches gilt schließlich für eine andere bekannte Ausführung, bei der schräge vorwärtsgeneigte Rotorwellen mit einer Mehrzahl von Messerscheiben übereinander vorgesehen sind, wobei den Messern jeder Scheibe ein Gegenmesser od. dgl. an der schrägen Frontwand des Maschinengestells zugeordnet ist (US-PS 4 397 136). Bei Maschinen mit im großen Abstand voneinander angeordneten Rotoren treten ganz andere Probleme auf, weil von vornherein nicht darauf geachtet zu werden braucht, daß ein Feld oder eine Wiese in voller Maschinenbreite ohne jegliche Streifenbildung gleichmäßig abgeerntet wird.

Der Erfindung liegt die Aufgabe zugrunde, die geschilderten Mängel zu beseitigen und die eingangs beschriebene Mäh- bzw. Häckselmaschine mit einfachen Mitteln so zu verbessern, daß keine Messerlockerung durch Verschleiß zu befürchten ist, ein Zurückschlagen der Messer zur Rotorwelle hin vermieden wird und sich vor allem eine gute, schonende Gutzerkleinerung bei möglichst geringem Leistungsbedarf erreichen läßt.

Die Erfindung löst die gestellte Aufgabe dadurch, daß alle Messer gleich ausgebildet sind, in der Vertikalprojektion jeweils die Umlaufbahn der Messer des einen Rotors außerhalb der Umlaufbahn der Messer des benachbarten Rotors angeordnet ist, die Messer mit ihren radial einwärts gerichteten Enden zwischen der den Rotor bildenden Scheibe und einer Deckscheibe gehalten oder überhaupt zwischen den beiden Einzelscheiben einer als Rotor dienenden Doppelscheibe gelagert sind, das von außen bis zu den Messerumlaufbahnen reichende Gegenmesser wenigstens vier Schneiden besitzt, die in ihrer Form und/oder Anordnung an das durch die Messerform bestimmte Profil der Umlaufbahnen der Messer benachbarter Rotoren angepaßt sind und bei der Rotordrehung vorzugsweise nacheinander zur Wirkung kommen.

Da also die einzelnen Messer mit ihren einwärts gerichteten Enden von den Deckscheiben gegen die Rotorscheibe gehalten oder zwischen den beiden Einzelscheiben der den Rotor bildenden Doppelscheibe gelagert sind, können sie, auch wenn der Lagerbolzen einen entsprechenden Ver-

schleiß erfahren hat oder die Messerbohrung ausgeschlagen ist, nicht um eine Querachse kippen, so daß die Umlaufbahnen der Messerenden nahe aneinandergerückt werden können, ohne eine Messerkollision während der Rotation befürchten zu müssen. Durch diese Messerbefestigung und den damit ermöglichten sehr geringen Abstand der Messerumlaufbahnen voneinander brauchen diese Umlaufbahnen einander nicht zu überschneiden, wenn man einen streifenfreien Schnitt des Erntegutes erreichen will. Die Nebeneinanderanordnung der Umlaufbahnen der Messer benachbarter Rotoren ohne Überschneidung bringt wieder den Vorteil mit sich, daß bei allen Rotoren an der Scheibenober- und -unterseite überall völlig gleiche Messer verwendet werden können, was den Herstellungsaufwand verringert, und daß es auch nicht notwendig ist, die Rotoren gegeneinander in Fahrtrichtung zu versetzen. Die Deckscheiben bzw. die Einzelscheiben der Doppelscheiben haben aber auch den weiteren Vorteil, daß sie ein Zurückschlagen der Messer beim Auftreffen auf ein Hindernis begrenzen. Wesentlich ist ferner, daß durch die besondere Ausbildung der Gegenmesser mit wenigstens vier Schneiden eine besonders gute Zerkleinerung des Häckselgutes erreicht wird, wobei sich eine Verstärkung dieser Wirkung auch dadurch ergibt, daß die festen Gegenmesser im Zwickelbereich benachbarter Rotoren angeordnet und mit ihren Schneiden an das durch die Messerform bestimmte Profil der Umlaufbahnen der Messer benachbarter Rotoren angepaßt sind. Der Leistungsbedarf wird verringert, wenn die Schneiden der Gegenmesser bei Rotordrehung nacheinander zur Wirkung kommen.

Eine besonders günstige Messerausbildung wird erreicht, wenn das Gegenmesser aus wenigstens einem im wesentlichen rautenförmigen Rahmen besteht, dessen konkav gekrümmte Seitenschenkel die Schneiden bilden. Um dabei die Schneidenanzahl zur Verbesserung der Gutzerkleinerung zu erhöhen, können mehrere in Parallelebenen gleichachsig angeordnete Rahmen mit der Zwickelform angepaßter abgestufter Größe zum Gegenmesser zusammengefaßt sein.

Eine Mehrzahl von Schneiden ergibt sich auch, wenn das Gegenmesser aus einer im wesentlichen rautenförmigen Grundplatte mit einwärts gekrümmten, Schneiden bildenden Seitenkanten und aus zur Grundplatte normalen, längs der Rautendiagonalen angesetzten, sich zu einer gemeinsamen Spitze vereinenden Dreiecksplatten besteht, deren freie Seitenkanten ebenfalls als Schneiden dienen.

Eine besonders einfache bzw. einfach herstellbare Konstruktion wird dadurch erzielt, daß das Gegenmesser jeweils aus mehreren die Schneiden bildenden, parallel über oder nebeneinander angeordneten Einzelmessern besteht.

Sollen Gegenmesser dieser Art mit Rotoren mit aus der Scheibenebene auf- bzw. abwärts gebogenen Messern zusammenarbeiten, so empfiehlt es sich, wenn die Einzelmesser bei symmetrischer Gegenmesserausbildung von einem mittleren Einzelmesser aus nach unten und oben bzw. nach beiden Seiten abgestuft verringerte Längen aufweisen.

In weiterer Ausbildung der Erfindung sind die über- oder nebeneinander angeordneten Einzelmesser in der durch die Rotoren bewirkten Bewegungsrichtung des Mäh- bzw. Häckselgutes gegeneinander versetzt. Es werden dann nicht alle Schneiden gleichzeitig wirksam, sondern es kommen die Einzelmesser als Gegenschneiden nacheinander zum Einsatz, was zu einem verringerten Leistungsbedarf führt.

Um bei einer Reihe von Einzelmessern die Verstopfungsgefahr im Gegenmesserbereich zu verringern, können die Einzelmesser die Form eines Doppelkeiles aufweisen. Schließlich kann es vorteilhaft sein, wenn die Schneiden des Gegenmessers gezahnt ausgebildet werden.

In der Zeichnung ist der Erfindungsgegenstand beispielsweise und zum Teil rein schematisch dargestellt. Es zeigen

Fig. 1 einen Teil einer Mäh- und Häckselmaschine in Vorderansicht,

Fig. 2 eine zugehörige Draufsicht auf die Rotoren und das Gegenmesser,

Fig. 3 bis 5 verschiedene Rotorausbildungen im Schnitt,

Fig. 6 und 7 verschiedene Ausführungen eines festen Gegenmessers im Schaubild,

Fig. 8 und 9 ein anderes Gegenmesser in Ansicht und Draufsicht,

Fig. 10 und 11 weitere Gegenmesservarianten in Ansicht und

Fig. 12 ein Gegenmesser mit doppelkeilförmigen Schneiden in Draufsicht.

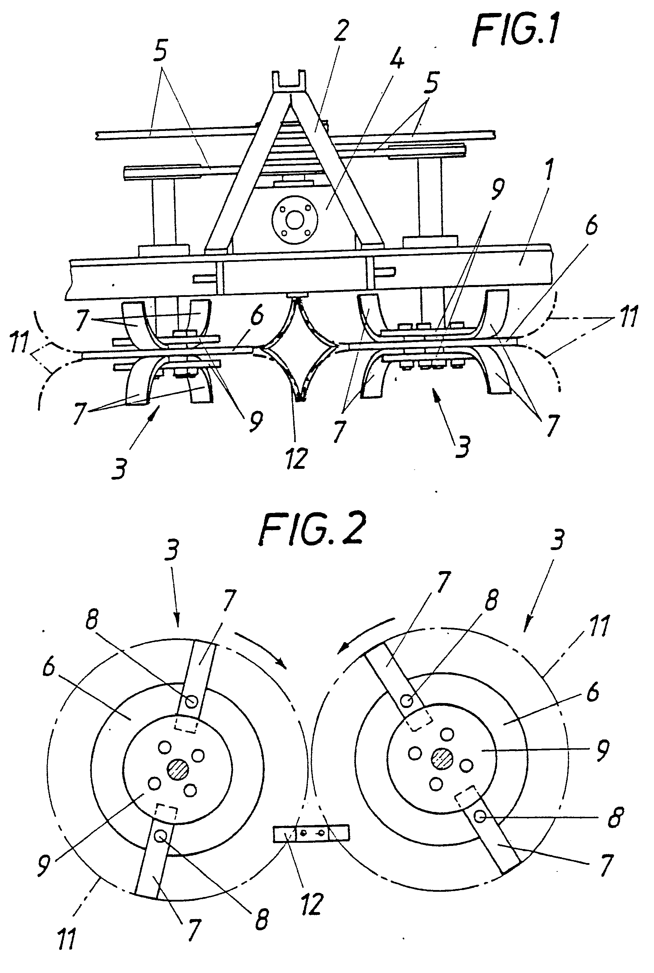

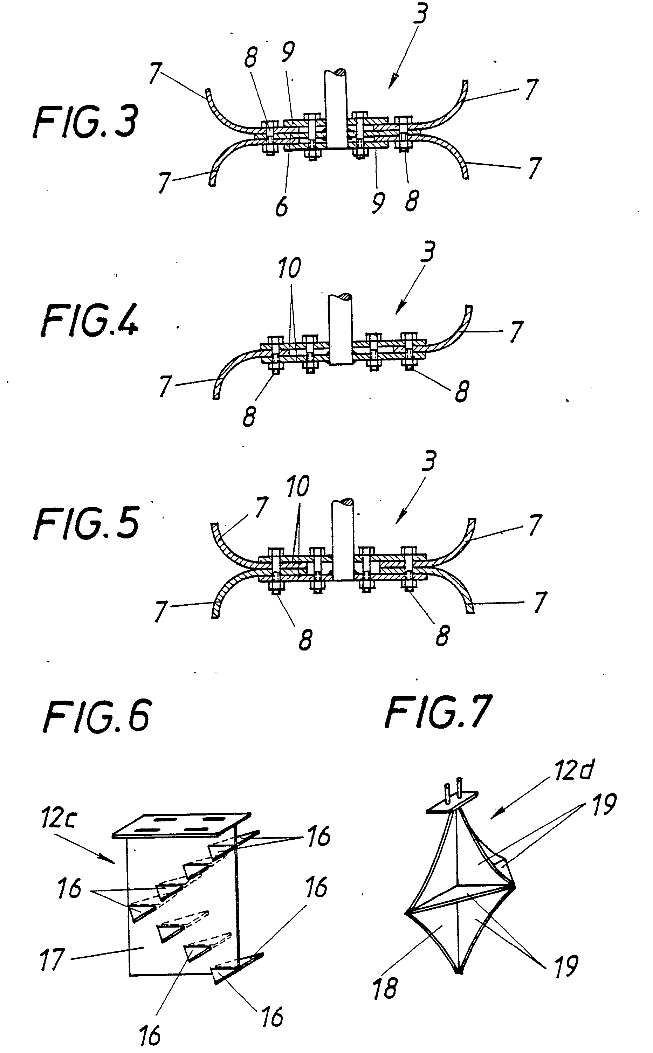

In einem Maschinengestell 1, das einen Anbaubock 2 zum Anschluß an das Dreilenkersystem eines Ackerschleppers od. dgl. aufweist, sind in einer Reihe nebeneinander mehrere vertikalachsige Rotoren 3 gelagert, die von einer Zapfwelle des Ackerschleppers über ein Winkelgetriebe 5 angetrieben werden. Die Rotoren 3 tragen in einer waagrechten Ebene liegende Scheiben 6, an deren Umfang aus der Scheibenebene auf- bzw. abwärtsgebogene Messer 7 angelenkt sind, wobei die Messer 7 μm vertikale Bolzen 8 schwenken können. Gemäß den Fig. 1 bis 3 sind die Messer 7 mit ihren radial einwärts gerichteten Enden zwischen der den Rotor bildenden Scheibe 6 und einer Deckscheibe 9 gehalten. Es ist aber auch möglich, anstelle der Scheibe 6 mit den beiden Deckscheiben 9 eine aus zwei Einzelscheiben 10 bestehende Doppelscheibe vorzusehen und die Messer 7 zwischen diesen Einzelscheiben 10 zu lagern, wie dies die Fig. 4 und 5 zeigen.

Aus Fig. 2 ist ersichtlich, daß in der Vertikalprojektion die Umlaufbahn 11 der Messer 7 des einen Rotors 3 außerhalb der Umlaufbahn 11 der Messer 7 des benachbarten Rotors 3 angeordnet ist, wobei allerdings der Abstand dieser Umlaufbahnen 11 auf ein Minimum herabgesetzt ist. Im Zwickelbereich zwischen den Umlaufbahnen 11 der Messer 7 ist ein ortsfestes Gegenmesser 12 vorgesehen, das an das durch die Form der Messer 7 bestimmte Profil der Umlaufbahnen 11

der Messer 7 benachbarter Rotoren angepaßt ist und demnach aus einem im wesentlichen rautenförmigen Rahmen besteht, dessen konkav gekrümmte Seitenschenkel die Schneiden bilden.

Das Messer 12d nach Fig. 7 besteht aus einer im wesentlichen rautenförmigen Grundplatte 18 mit einwärts gekrümmten Seitenkanten und aus zur Grundplatte 18 normalen, längs der Rautendiagonalen angesetzten Dreiecksplatten 19, die sich zu einer Spitze vereinen. Alle freien Seitenkanten dienen als Schneide. Ein derartiges Gegenmesser ist in beiden Richtungen der Umlaufbahn der Messer 7 der Rotoren angepaßt.

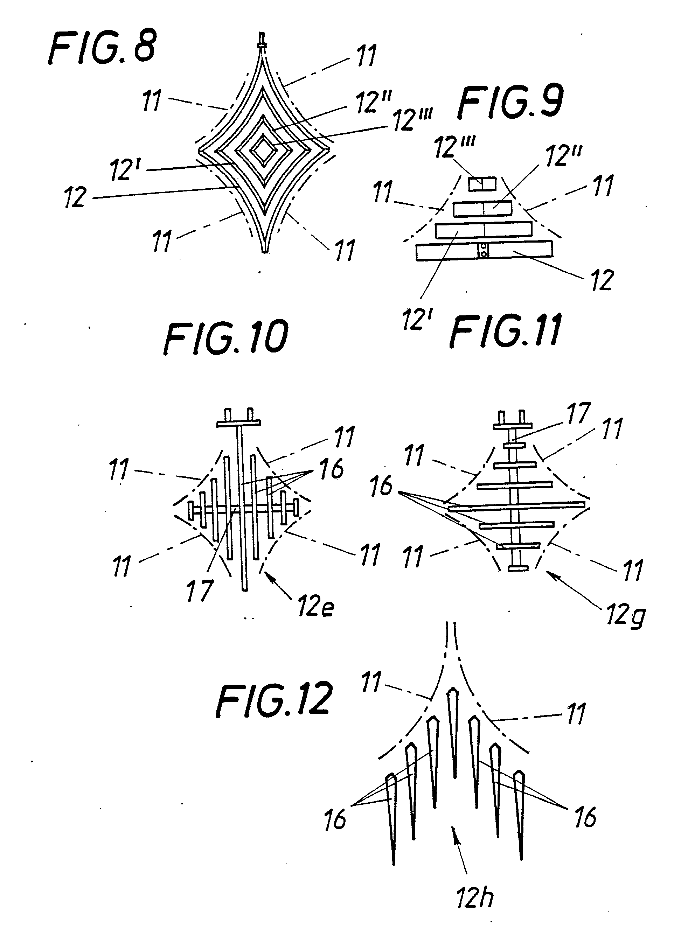

Eine solche Anpassung mit einer Vermehrung der Schneiden wird auch bei der Ausbildung nach den Fig. 8 und 9 erzielt, nach der mehrere in Parallelebenen gleichachsig angeordnete Rahmen 12, 12', 12", 12''' mit der Zwickelform zwischen den Umlaufbahnen 11 angepaßter abgestufter Größ zu einem Gegenmesser zusammengefaßt sind. Hier wird ebenso wie beim Gegenmesser 12c nach Fig. 6 der weitere Vorteil erzielt, daß die einzelnen Rahmen 12, 12', 12", 12''' bzw. die Einzelmesser 16 nicht gleichzeitig, sondern nacheinander zur Wirkung kommen, da die Einzelmesser bzw. Rahmen in durch die Rotoren bestimmter Förderrichtung des Mäh- bzw. Häckselgutes gegeneinander versetzt sind.

Nach den Fig. 10 und 12 sind am Mittelquerbalken 17 in symmetrischer Anordnung verschieden lange Einzelmesser 16 befestigt, wobei sich die vertikalen Einzelmesser 16 zu einem Gegenmesser 12e vereinen und die horizontalen Einzelmesser 16 nach Fig. 11 ein Gegenmesser 12g ergeben. Nach Fig. 12 besitzen die vertikalen Einzelmesser 16 des Gegenmessers 12h die Form eines Doppelkeiles. Auch hier ist die gegenseitige Versetzung der Einzelmesser 16 in Förderrichtung des Mäh- bzw. Häckselgutes ersichtlich.

**Patentansprüche**

1. Mäh- bzw. Häckselmaschine mit wenigstens zwei vertikalachsigen Rotoren (3), deren Achsen in einer quer zur Fahrtrichtung angeordneten Ebene nebeneinander liegen und die aus in einer gemeinsamen Horizontalebene vorgesehenen Scheiben (6 ; 10) bestehen, an deren Umfang um vertikale Bolzen (8) schwenkbare Messer (7) angelenkt sind, die aus der Scheibenebene auf- bzw. abwärtsgebogen sind, und mit wenigstens einem ortsfesten Gegenmesser (12 ; 12c ; 12d ; 12e ; 12f ; 12g ; 12h), das im Zwickelbereich zwischen den Umlaufbahnen (11) der Messer (7) benachbarter Rotoren (3) vorgesehen ist und mit diesen Messern (7) zusammenwirkt, wobei alle Messer (7) gleich ausgebildet sind, in der Vertikalprojektion jeweils die Umlaufbahn der Messer (7) des einen Rotors (3) außerhalb der Umlaufbahn der Messer (7 ; 7a) des benachbarten Rotors (3) angeordnet ist, die Messer (7) mit ihren radial einwärts gerichteten Enden zwischen der den Rotor (3) bildenden Scheibe (6) und einer Deckscheibe (9) gehalten oder überhaupt zwischen den beiden Einzelscheiben (10) einer als Rotor dienenden Doppelscheibe gelagert sind, das von außen bis zu den Messerumlaufbahnen reichende Gegenmesser (12 ; 12c ; 12d ; 12e ; 12f ; 12g ; 12h) wenigstens vier Schneiden besitzt, die in ihrer Form und/oder Anordnung an das durch die Messerform bestimmte Profil der Umlaufbahnen (11) der Messer (7) benachbarter Rotoren (3) angepaßt sind und bei der Rotordrehung vorzugsweise nacheinander zur Wirkung kommen.

2. Maschine nach Anspruch 1, dadurch gekennzeichnet, daß das Gegenmesser aus wenigstens einem im wesentlichen rautenförmigen Rahmen (12) besteht, dessen konkav gekrümmte Seitenschenkel die Schneiden bilden.

3. Maschine nach den Ansprüchen 1 und 2, dadurch gekennzeichnet, daß mehrere in Parallelebenen gleichachsig angeordnete Rahmen (12, 12', 12", 12''') mit der Zwickelform angepaßter abgestufter Größe zum Gegenmesser zusammengefaßt sind.

4. Maschine nach Anspruch 1, dadurch gekennzeichnet, daß das Gegenmesser (12d) aus einer im wesentlichen rautenförmigen Grundplatte (18) mit einwärts gekrümmten, Schneiden bildenden Seitenkanten und aus zur Grundplatte (16) normalen, längs der Rautendiagonalen angesetzten, sich zu einer gemeinsamen Spitze vereinenden Dreiecksplatten (19) besteht, deren freie Seitenkanten ebenfalls als Schneiden dienen.

5. Maschine nach Anspruch 1, dadurch gekennzeichnet, daß das Gegenmesser (12c ; 12e ; 12g ; 12h) jeweils aus mehreren die Schneiden bildenden, parallel über- oder nebeneinander angeordneten Einzelmessern (16) besteht.

6. Maschine nach den Ansprüchen 1 und 5, dadurch gekennzeichnet, daß die Einzelmesser (16) bei symmetrischer Gegenmesserausbildung von einem mittleren Einzelmesser aus nach unten und oben bzw. nach beiden Seiten abgestuft verringerte Längen aufweisen.

7. Maschine nach Anspruch 5 oder 6, dadurch gekennzeichnet, daß die über- oder nebeneinander angeordneten Einzelmesser (16) in der durch die Rotoren (3) bewirkten Bewegungsrichtung des Mäh- bzw. Häckselgutes gegeneinander versetzt sind.

8. Maschine nach einem der Ansprüche 5 bis 7, dadurch gekennzeichnet, daß die Einzelmesser (16) die Form eines Doppelkeiles aufweisen.

9. Maschine nach einem der Ansprüche 1 bis 8, dadurch gekennzeichnet, daß die Schneiden der Gegenmesser (12 ; 12c ; 12d ; 12e ; 12f ; 12g ; 12h) gezahnt ausgebildet sind.

**Claims**

1. A mowing and/or chopping machine comprising at least two rotors (3) having vertical axes, which are juxtaposed in a plane that is transverse to the direction of travel, which rotors consist of disks (6 ; 10), which are disposed in a common horizontal plane and are provided with knives (7), which are pivoted on vertical pins (8) at the periphery of said disks and are curved upwardly and downwardly out of the plane of the disks, also comprising at least one stationary backing knife (12 ; 12c ; 12d ; 12e ; 12f ; 12g ; 12h), which is disposed in the generally triangular region be-- tween the orbits (11) of the knives (7) of adjacent rotors (3) and cooperates with said knives (7), wherein all knives (7) have the same shape, in the vertical projection the orbit of the knives (7) of the one rotor (3) is disposed outside the orbit of the knives (7 ; 7a) of the adjacent rotor (3), the radially inwardly directed ends of the knives (7) are held between the disk (6), which constitutes the rotor (3), and a cover disk (9), or are movably mounted between the two individual disks (10) of a double disk, which serves as a rotor, the backing knife (12 ; 12c ; 12d ; 12e ; 12f ; 12g ; 12h) extends from the outside as far as to the knife orbits and has at least four cutting edges, which conform in shape and/or arrangement to the profile of the orbits (11) of the knives (7) of adjacent rotors (3), which profile is determined by the shape of the knives, and said cutting edges preferably act in succession during the rotation of the rotors.

2. A machine according to claim 1, characterized in that the backing knife consists of at least one substantially diamond-shaped frame (12), which has concavely curved side bars, which constitute the cutting edges.

3. A machine according to claims 1 and 2, characterized in that a plurality of frames (12, 12', 12'', 12''') coaxially arranged in parallel planes and having graded sizes which are adapted to the shape of the generally triangular region are combined to form the backing knife.

4. A machine according to claim 1, characterized in that the backing knife (12d) consists of a substantially diamond-shaped base plate (18), which has inwardly curved side edges, which constitute cutting edges, and of triangular plates (19), which are normal to the base plate (18) and are attached along the diagonals of the diamond and join at a common tip, and whose free side edges also serve as cutting edges.

5. A mowing machine according to claim 1, characterized in that each of the backing knifes (12c ; 12e ; 12g ; 12h) consists of a plurality of individual knives (16), which constitute the cutting edges and are arranged in parallel one over or beside the other.

6. A machine according to claims 1 and 5, characterized in that the backing knife is symmetrical and the individual knives (16) have graded lengths, which decrease from a central individual knife downwardly and upwardly and/or to both sides.

7. A machine according to claim 5 or 6, characterized in that the individual knives (16), which are arranged one over or beside the other, are staggered in the direction of the movement which is imparted by the rotors (3) to the material to be mowed and/or chopped.

8. A machine according to any of claims 5 to 7, characterized in that the individual knives (16) have the form of a double wedge.

9. A machine according to any of claims 1 to 8, characterized in that the cutting edges of the backing knives (12 ; 12c ; 12d ; 12e ; 12f ; 12g ; 12h) are serrated.

**Revendications**

1. Faucheuse-hacheuse comprenant au moins deux rotors (3) à axe vertical, dont les axes sont situés l'un à côté de l'autre dans un plan disposé transversalement à la direction de la marche et qui sont composés de disques (6 ; 10) prévus dans un plan horizontal commun et sur la périphérie desquels sont articulées des lames (7) pouvant pivoter autour d'axes verticaux (8) et qui sont recourbées vers le haut ou vers le bas en dehors du plan de coupe, et au moins une contre-lame fixe (12 ; 12c ; 12d ; 12f ; 12g ; 12h) qui est prévue dans la région en double coin comprise entre les trajectoires circulaires (11) des lames (7) des rotors (3) adjacents, et qui coopère avec ces lames (7), dans laquelle toutes les lames (7) sont de même configuration, la trajectoire des lames (7) des rotors (3) étant disposée, vue en projection verticale, en dehors de la trajectoire des lames (7 ; 7a) du rotor (3) adjacent, les lames (7) sont montées, par leurs extrémités dirigées radialement vers l'intérieur, entre le disque (6) formant le rotor (3) et un contre-disque (9) où elles sont, d'une façon ou d'une autre, tourillonnées entre les deux disques distincts (10) d'un double disque servant de rotor, la contrelame (12 ; 12c ; 12d ; 2e ; 12f ; 12g ; 12h) qui s'étend de l'extérieur jusqu'aux trajectoires des lames possédant au moins quatre tranchants qui sont adaptés, par leur forme et/ou leur disposition au profil des trajectoires (11) des lames (7) des rotors (3) adjacents, profil qui est déterminé par la forme des lames, et qui entrent, de préférence en action, l'un après l'autre lors de la rotation des rotors.

2. Machine selon la revendication 1, caractérisée par le fait que la contre-lame est composée d'au moins un cadre (12) présentant sensiblement la forme d'un losange et dont les branches latérales, incurvées avec une forme concave, forment les tranchants.

3. Machine selon les revendications 1 et 2, caractérisée par le fait que plusieurs cadres (12, 12', 12'', 12''') de dimensions échelonnées et adaptées à la forme de double coin et qui sont disposés coaxialement dans des plans parallèles, sont réunis pour former la contrelame.

4. Machine selon la revendication 1, caractérisée par le fait que la contre-lame (12d) est composée d'une plaque de base (18) sensiblement en forme de losange et possédant des bords latéraux incurvés vers l'intérieur et formant des tranchants et des plaques triangulaires (19), perpendiculaires à la plaque de base (18), disposées selon les diagonales du losange et se rejoignant pour former une pointe commune, et dont les bords latéraux libres servent également de tranchants.

5. Machine selon la revendication 1, caractérisée par le fait que la contre-lame (12c ; 12e ; 12g ; 12h) est composée de plusieurs lames (16) formant les tranchants et qui sont disposées parallèlement entre elles, les unes au-dessus des autres ou à côté des autres.

6. Machine selon les revendications 1 à 5, caractérisée par le fait que, dans le cas d'une conformation symétrique de la contre-lame, les lames (16) présentent, en partant d'une lame centrale, des longueurs qui diminuent par échelons vers le bas et vers le haut ainsi que vers les deux côtés.

7. Machine selon la revendication 5 ou 6, caractérisée par le fait que les lames (16), disposées les unes au-dessus ou à côté des autres, sont décalées les unes par rapport aux autres dans la direction du mouvement du produit fauché ou haché, qui est déterminée par les rotors (3).

8. Machine selon l'une des revendications 5 à 7, caractérisée par le fait que les lames (16) présentent la forme d'un double coin.

9. Machine selon l'une des revendications 1 à 8, caractérisée par le fait que les tranchants des contrelames (12 ; 12c ; 12d ; 12e ; 12f ; 12g ; 12h) sont dentelés.

0 172 160

*FIG.1*

*FIG.2*

1

0 172 160

FIG.3

FIG.4

FIG.5

FIG.6

FIG.7

2

FIG.8

FIG.9

FIG.10

FIG.11

FIG.12